# EUROPÄISCHE PATENTSCHRIFT

(11) **EP 4 133 351 B1**
(45) Veröffentlichungstag und Bekanntmachung des Hinweises auf die Patenterteilung: **06.12.2023**
(21) Anmeldenummer: 22711890.8
(22) Anmeldetag: 21.02.2022
(51) Int. Cl.: G05D 16/10

(54) **DRUCKREDUZIERVENTIL**
PRESSURE-REDUCING VALVE
VANNE DE RÉDUCTION DE PRESSION

(30) Priorität: 17.03.2021 DE 202021101348 U
(43) Veröffentlichungstag der Anmeldung: 15.02.2023
(73) Patentinhaber: Neoperl GmbH, 79379 Müllheim (DE)
(72) Erfinder: FANGMEIER, Martin, 79424 Auggen (DE); HAUTH, Matthias, 79674 Todtnau / Muggenbrunn (DE); MEYER, Burkhard, 79426 Buggingen (DE)
(74) Vertreter: Mertzlufft-Paufler, Cornelius
(86) Internationale Anmeldenummer: PCT/EP2022/054247
(87) Internationale Veröffentlichungsnummer: WO 2022/194490

(56) Entgegenhaltungen:
- WO-A2-2007/025170
- DE-A1-102014 005 854
- US-A1- 2005 126 636

## Beschreibung

Die Erfindung betrifft ein Druckreduzierventil, das einen Ventilträger mit wenigstens einem Durchströmkanal aufweist, und das einen topfförmigen Ventilkörper hat, der an einem, in das Topfinnere des Ventilkörpers vorstehenden Führungszapfen von einer Offenstellung gegen eine Rückstellkraft in eine Schließstellung verschieblich geführt ist, in welcher Schließstellung der Ventilkörper mit dem Umfangsrand seiner Topfform derart an einem am Ventilträger vorgesehenen Ventilsitz anliegt, dass der Ventilkörper zumindest eine Kanalöffnung des wenigstens einen Durchströmkanals verschließt.

Aus der DE 10 2014 005 854 A1 ist bereits ein Druckreduzierventil vorbekannt, das ein als hülsenförmiger Aufnahmeadapter ausgebildetes Ventilgehäuse aufweist. Das Ventilgehäuse des vorbekannten Druckreduzierventils hat an seinem zuströmseitigen ersten Stirnendbereich ein Innengewinde und weist an seinem abströmseitigen zweiten Stirnendbereich ein Außengewinde auf. Während das am zuströmseitigen ersten Endbereich vorgesehene Innengewinde beispielsweise an einem Eckventil angeschraubt werden kann, ist das an dem abströmseitigen zweiten Stirnendbereich des Ventilgehäuses vorgesehene Außengewinde in das Innengewinde eines Schlauchhülsenmutter-Fittings einer flexiblen Schlauchleitung einschraubbar, die zu einer Wasserentnahmestelle oder einem anderen Wasserverbraucher führt.

Aus der US 2005/126636 A1 ist ein Druckreduzierventil bekannt, welches über niedrige Produktionskosten verfügt, da es nur über eine geringe Anzahl an Dichtelementen verfügt, wobei die Erzeugung einer Hysterese in einem Korrelationsdiagramm zwischen einem primären und einem sekundären Druck verringert wird, und welches aufgrund einer kleinen radialen Größe einfach in ein Stadtwasserrohr einbaubar ist.

Aus der WO 2007/025170 A2 ist eine Manschettendichtung bekannt, die insbesondere für Kugelgelenke geeignet ist, die jedoch in jeder Anlage zur Abdichtung von relativ gelenkigen, kippbaren oder drehbaren Teilen verwendet werden kann, während sie automatisch Überdrücke entlüftet oder abbaut, wie sie durch Hochdruckschmierung oder durch die Ansammlung übermäßiger Mengen von Schmiermitteln entstehen können.

Das vorbekannte Druckreduzierventil weist im Gehäuseinnenraum seines Ventilgehäuses einen Ventilträger mit wenigstens einem Durchströmkanal auf und hat einen topfförmigen Ventilkörper, der an einem, in das Topfinnere des Ventilkörpers vorstehenden Führungszapfen von einer Offenstellung gegen eine Rückstellkraft in eine Schließstellung verschieblich geführt ist, in welcher Schließstellung der Ventilkörper mit dem Umfangsrand seiner Topfform derart an einem am Ventilträger vorgesehenen Ventilsitz anliegt, dass der Ventilkörper zumindest eine Kanalöffnung des wenigstens einen Durchströmkanals verschließt. Dabei bildet der Topfinnenraum des topfförmigen Ventilkörpers ein mit der Atmosphäre verbundenes Druckausgleichsvolumen, derart, dass der Ventilkörper in Abhängigkeit von dem auf der Abströmseite des Druckreduzierventils anstehenden Wasserdruck gegen die Rückstellkraft zumindest eines Rückstellelements am Führungszapfen verschoben wird, wobei der Öffnungsquerschnitt der zumindest einen Kanalöffnung verändert oder gegebenenfalls auch ganz verschlossen wird.

In manchen Regionen besteht jedoch das Problem, dass mit dem, in den Versorgungsleitungen geführten Wasserstrom auch Sandkörner oder anderen Verunreinigungen mitgerissen werden, die sich zwischen dem topfförmigen Ventilkörper einerseits und dem Führungszapfen andererseits verfangen und welche die zwischen diesen Bauteilen vorgesehene Ringdichtung beschädigen können.

Es besteht daher die Aufgabe, ein Druckreduzierventil der eingangs erwähnten Art zu schaffen, das auch in solchen Regionen wartungsarm und störungsunanfällig betrieben werden kann, selbst wenn dort Sandkörner oder andere kleinere Verunreinigungen über die Versorgungsleitungen in das Innere des Druckreduzierventils gelangen.

Die erfindungsgemäße Lösung dieser Aufgabe besteht bei dem Druckreduzierventil der eingangs erwähnten Art insbesondere darin, dass am Topfinnenumfang des Ventilkörpers und/oder am Zapfenaußenumfang des Führungszapfens wenigstens eine Abstreiflippe vorsteht, die dem Zapfenaußenumfang bzw. dem Topfinnenumfang des benachbarten Bauteiles angenähert ist oder daran anliegt.

Das erfindungsgemäße Druckreduzierventil weist einen Ventilträger mit wenigstens einem Durchströmkanal auf und hat einen topfförmigen Ventilkörper, der an einem, in das Topfinnere des Ventilkörper vorstehenden Führungszapfen von einer Offenstellung gegen eine Rückstellkraft in eine Schließstellung verschieblich geführt ist. Der am Führungszapfen des Ventilträgers verschieblich geführte und topfförmig ausgestaltete Ventilkörper ist in Abhängigkeit von dem auf der Abströmseite des Druckreduzierventils anstehenden Wasserdruck derart gegen die Rückstellkraft zumindest eines Rückstellelements am Führungszapfen verschiebbar, dass der Öffnungsquerschnitt der zumindest einen Kanalöffnung verändert oder gegebenenfalls auch ganz verschlossen wird. In der Schließstellung auch des erfindungsgemäßen Druckreduzierventils liegt der Ventilkörper mit dem Umfangsrand seiner Topfform derart an einem am Ventilträger vorgesehenen Ventilsitz an, dass der Ventilkörper zumindest eine Kanalöffnung des wenigstens einen Durchströmkanals verschließt. Damit die in dem auf das Druckreduzierventil zuströmenden Wasser mitgerissenen Sandkörner und andere kleinere Verunreinigungen nicht in den Ringspalt zwischen dem Führungszapfen einerseits und dem Ventilkörper andererseits gelangen und eine in diesem Ringspalt eventuell vorgesehene Ringdichtung beschädigen können, steht am Topfinnenumfang des Ventilkörpers und/oder am Zapfenaußenumfang des Führungszapfen wenigstens eine Abstreiflippe vor, die dem Zapfenaußenumfang beziehungsweise dem Topfinnenumfang des benachbarten Bauteiles (Ventilkörper oder Führungszapfen) angenähert ist oder daran anliegt. Da die an dem einen Bauteil vorstehende Abstreiflippe mit ihrem freien Lippenrand dem benachbarten Bauteil angenähert ist oder daran anliegt, wird der zwischen dem topfförmigen Ventilkörper und dem Führungszapfen verbleibende Ringspalt gegen ein unerwünschtes Eindringen von Sandkörnern und anderen kleineren Verunreinigungen derart wirksam geschützt, dass sich das erfindungsgemäße Druckreduzierventil durch einen wartungsarmen und störungsfreien Betrieb auszeichnet.

Damit der zwischen dem topfförmigen Ventilkörper einerseits und dem Führungszapfen andererseits verbleibende Ringspalt möglichst über den gesamten Umfang gegen Verunreinigungen wirksam geschützt ist, sieht eine bevorzugte Ausführungsform gemäß der Erfindung vor, dass wenigstens eine Abstreiflippe oder mindestens eine der Abstreiflippen am Zapfenaußenumfang des Führungszapfens und/oder am Topfinnenumfang des Ventilkörpers vorzugsweise in einer Querschnittsebene umläuft.

Eine besonders einfache und mit geringem Aufwand herstellbare Ausführungsform gemäß der Erfindung sieht vor, dass die wenigstens eine Abstreiflippe einstückig an den Führungszapfen und/oder an den Ventilkörper angeformt ist.

Damit auch eine an den Ventilkörper und/oder den Führungszapfen angeformte und am benachbarten Bauteil (Führungszapfen oder Ventilkörper) anliegende Abstreiflippe nicht die Schiebebewegung des Ventilkörpers am Führungszapfen behindert, ist es vorteilhaft, wenn die wenigstens eine Abstreiflippe oder mindestens eine der Abstreiflippen eine sich zum freien Lippenrand verjüngende und vorzugsweise pfeilspitzenförmige Querschnittsform aufweist.

Ein störungsfreier Betrieb des erfindungsgemäßen Druckreduzierventils wird noch zusätzlich begünstigt, wenn am Topfinnenumfang des Ventilkörpers und/oder am Zapfenaußenumfang des Führungszapfens mindestens zwei, in Längsrichtung des Ventilkörpers bzw. des Führungszapfens voneinander beabstandete Abstreiflippen vorgesehen sind.

Um den Ringspalt zwischen dem Topfinnenumfang des Ventilkörpers und dem Zapfenaußenumfang des Führungszapfens möglichst über seine gesamte Längserstreckung gegen funktionsbeeinträchtigende Verunreinigungen zu schützen, ist es vorteilhaft, wenn von den mindestens zwei, am Führungszapfen vorstehenden Abstreiflippen eine erste Abstreiflippe mit der Basis ihrer Querschnittsform den Ventilsitz umgrenzt.

Eine bevorzugte Ausführungsform gemäß der Erfindung sieht vor, dass das Druckreduzierventil ein Ventilgehäuse hat, in dessen Gehäuseinnenraum der Ventilträger vorgesehen oder eingesetzt ist.

Dabei sieht ein bevorzugtes Ausführungsbeispiel gemäß der Erfindung vor, dass das Ventilgehäuse als Schlauchhülsenmutter einer flexiblen Schlauchleitung oder als hülsenförmiger Aufnahmeadapter einer Leitungskupplung ausgebildet ist.

Weiterbildungen gemäß der Erfindung ergeben sich aus der nachfolgenden Beschreibung eines bevorzugten Ausführungsbeispieles in Verbindung mit den Ansprüchen sowie der Zeichnung. Nachstehend wird die Erfindung anhand eines bevorzugten Ausführungsbeispieles noch näher beschrieben.

Es zeigt:
- Figur 1: ein, in einer isometrischen Darstellung gezeigtes Druckreduzierventil, das einen Ventilträger hat, an dem ein Führungszapfen des Ventilträgers vorsteht, wobei an dem Führungszapfen des Ventilträgers ein topfförmiger Ventilkörper von der hier gezeigten Offenstellung gegen eine Rückstellkraft in eine Schließstellung verschieblich geführt ist, in welcher Schließstellung der Ventilkörper an einem Ventilsitz des Ventilträgers anliegt,
- Figur 2: das Druckreduzierventil aus Figur 1 in einer auseinandergezogenen Einzelteildarstellung, wobei in dieser als Explosionszeichnung ausgeführten Einzelteildarstellung der topfförmige Ventilkörper, ein als Rückstellkraft dienendes und als Schrauben-Druckfeder ausgebildetes Rückstellelement, eine am Führungszapfen gehaltene Ringdichtung, der Ventilträger mit dem daran vorstehenden Führungszapfen sowie eine mit einem hier nicht gezeigten Ventilgehäuse zusammenwirkende Ringdichtung des Druckreduzierventils erkennbar sind,
- Figur 3: das Druckreduzierventil aus Figur 1 in einem kuchenschnittförmig ausgeführten Längsschnitt in der Offenposition des Druckreduzierventils,
- Figur 4: das Druckreduzierventil aus Figur 1 bis 3 in einer mittleren Position des am Führungszapfen des Ventilträgers verschieblich geführten Ventilkörpers,
- Figur 5: das hier ebenfalls längsgeschnitten dargestellte Druckreduzierventil aus den Figuren 1 bis 4 in seiner Schließstellung, in welcher Schließstellung der topfförmige Ventilkörper an einem Ventilsitz am Ventilträger dicht anliegt,
- Figur 6: einen Detail-Längsschnitt durch den in Figur 5 eingekreisten Teilbereich des Druckreduzierventils,
- Figur 7: den Ventilträger des in den Figuren 1 bis 6 gezeigten Druckreduzierventils in einer isometrischen Darstellung, und
- Figur 8: das Druckreduzierventil aus den Figuren 1 bis 6 in einer längsgeschnittenen Seitenansicht, wobei sich der topfförmige Ventilkörper in einer mittleren Relativposition gegenüber dem Führungszapfen des Druckreduzierventils befindet.

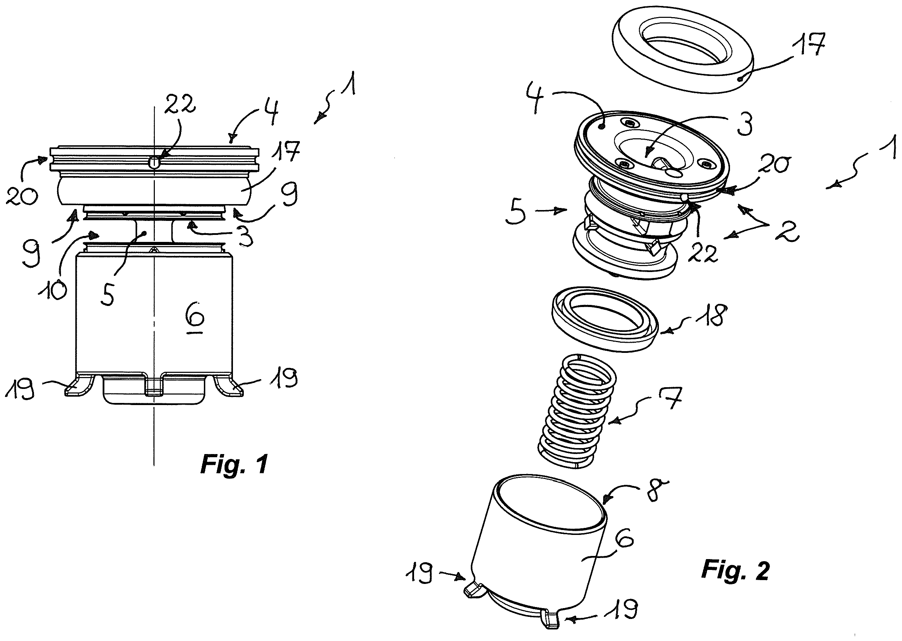

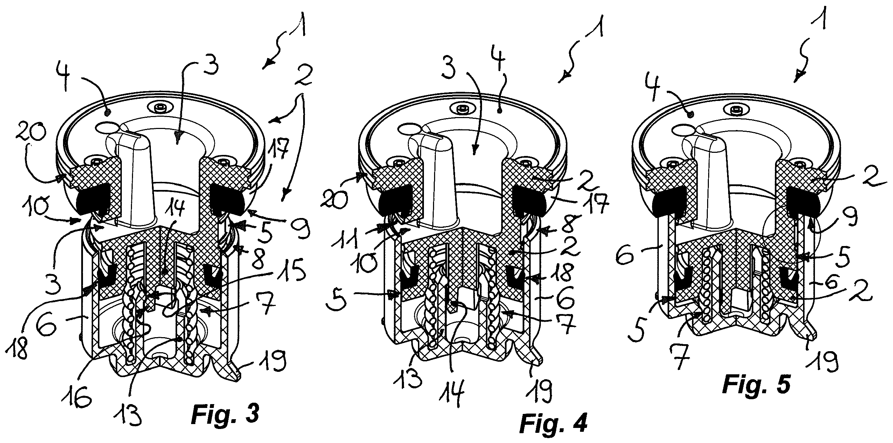

In den Figuren 1 bis 6 und 8 ist ein Druckreduzierventil 1 dargestellt, das in eine Wasserleitung zwischengeschaltet ist und in Pfeilrichtung PF 1 durchströmt wird. Das in Pfeilrichtung PF1 durchströmte Druckreduzierventil 1 ist beispielsweise in eine Wasserleitung einsetzbar, um den Wasserdruck in dem vom Druckreduzierventil 1 stromabwärts gelegenen Leitungsabschnitt auf einen festgelegten Maximalwert zu begrenzen. Das Druckreduzierventil 1 weist einen Ventilträger 2 auf, in dem wenigstens ein Durchströmkanal 3 vorgesehen ist. Der Ventilträger 2 hat einen zuströmseitig angeordneten tellerförmigen Ventilträger-Abschnitt 4, an dem ein Führungszapfen 5 vorsteht. An dem Führungszapfen 5 ist ein topfförmiger Ventilkörper 6 verschieblich geführt. Verengt sich der Leitungsquerschnitt im Bereich des dem Druckreduzierventil 1 nachfolgenden Leitungsabschnitts, beispielsweise weil ein abströmseitig vorgesehenes Regel- und/oder Sperrventil nur geringfügig geöffnet oder vollständig geschlossen wird, und steigt dort der Wasserdruck zunehmend, wird der verschieblich geführte Ventilkörper 6 unter dem Druck des durchströmenden Mediums von der in den Figuren 1, 3, 4 und 8 gezeigten Offenstellungen gegen die Rückstellkraft mindestens einer als Rückstellelement dienenden Druck- oder Rückstellfeder 7 in die in Figur 5 gezeigte Schließstellung bewegt, in welcher Schließstellung der Ventilkörper 6 mit dem Umfangsrand 8 seiner Topfform derart an einem am Ventilträger 2 vorgesehenen Ventilsitz 9 anliegt, dass der Ventilkörper 6 zumindest eine Kanalöffnung 10 des wenigstens einen Durchströmkanals 3 verschließt. Da der Ventilkörper 6 bei steigendem Wasserdruck in dem vom Druckreduzierventil 1 stromabwärts gelegenen Leitungsabschnitt gegen die Rückstellkraft der zumindest einen Rückstellfeder 7 zunehmend in Richtung zum Ventilsitz 9 des Ventilträgers 2 gedrückt wird und somit an der hiermit kleiner werdenden Kanalöffnung 10 der Druckverlust steigt, wird der Druck des Fluids in dem vom Druckreduzierventil 1 stromabwärts gelegenen Leitungsabschnitt auf einen festgelegten Maximalwert begrenzt.

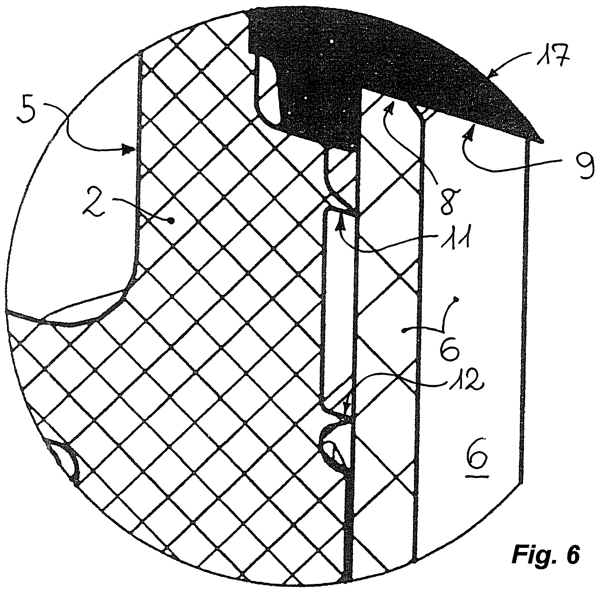

Wie in den Längsschnitten gemäß den Figuren 3 bis 5 und 8 sowie insbesondere im Detail-Längsschnitt gemäß Figur 6 erkennbar ist, steht am Topfinnenumfang des Ventilkörpers und/oder - wie hier - am Zapfenaußenumfang des Führungszapfens 5 wenigstens eine Abstreiflippe 11, 12 vor, die dem Zapfenaußenumfang beziehungsweise hier dem Topfinnenumfang des benachbarten Bauteiles 6 angenähert ist oder daran anliegt.

In dem in den Figuren 1 bis 8 gezeigten Ausführungsbeispiel sind am Führungszapfen 5 außenumfangseitig zwei voneinander beabstandete Abstreiflippen 11, 12 vorgesehen, die am Zapfenaußenumfang des Führungszapfens 5 in einer Querschnittsebene umlaufen und die einstückig an den Führungszapfen 5 angeformt sind. Durch die einstückige Ausgestaltung des Führungszapfens 5 und seiner Abstreiflippen 11, 12 wird die Herstellung dieses Bauteils 5 wesentlich erleichtert. Da diese Abstreiflippen 11, 12 dem benachbarten Bauteil 6 angenähert sind oder daran anliegen, können diese Abstreiflippen 11, 12 eventuelle Sandkörner oder dergleichen Schmutzpartikel wirkungsvoll abstreifen, die andernfalls die am Führungszapfen 5 vorgesehene Ringdichtung 18 beschädigen und Undichtigkeiten in diesem Bereich verursachen könnten. Die am Führungszapfen 5 vorstehenden Abstreiflippen 11, 12 weisen jeweils eine sich zum freien Lippenrand verjüngende und hier pfeilspitzenförmige Querschnittsform auf, wobei diese Abstreiflippen 11, 12 mit der Pfeilspitze ihrer Querschnittsform linienförmig am Topfinnenumfang des topfförmigen Ventilkörpers 6 anliegen. Da die Abstreiflippen 11, 12 sich somit zu Ihrem freien Umfangsrand hin verjüngen, und da diese Abstreiflippen an ihrem freien Umfangsrand vergleichsweise scharfkantig ausgestaltet sind, wird die Herstellung des Führungszapfens 5 und der daran angeformten Abstreiflippen wesentlich vereinfacht, und die Abstreiflippen 11, 12 können einzelnen dieser Schmutzpartikel elastisch leicht ausweichen, wenn einzelne dieser Schmutzpartikel unbeabsichtigt doch in den Bereich dieser Abstreiflippen 11, 12 kommen oder diese Abstreiflippen 11, 12 geringfügig einschneiden sollten. Von den zwei, am Führungszapfen 5 vorstehenden Abstreiflippen 11, 12 umgrenzt eine erste Abstreiflippe 11 mit der Basis ihrer Querschnittsform den Ventilsitz 9 am Ventilträger 2.

Mithilfe der hier am Führungszapfen 5 vorstehenden und am Topfinnenumfang des Ventilkörpers 6 anliegenden Abstreiflippen 11, 12 wird der zwischen dem Ventilkörper 6 und dem Führungszapfen 5 verbleibende Ringspalt gegen ein funktionsbeeinträchtigendes Eindringen von im Wasserstrom mitgerissener Sandkörner oder dergleichen Verunreinigungen gesichert. Da die erste Abstreiflippe 11 mit der Basis ihrer Querschnittsform den Ventilsitz 9 umgrenzt, wird der Ringspalt zwischen dem Ventilkörper 6 und dem Führungszapfen 5 praktisch über seine gesamte Längserstreckung gegen funktionsbeeinträchtigende Verunreinigungen geschützt. Da die Abstreiflippen 11, 12 mit ihrem freien Rand nur linienförmig am Topfinnenumfang des Ventilkörpers 6 anliegen, wird der durch die Abstreiflippen 11, 12 verursachte Reibungswiderstand ausreichend klein gehalten und ein Verschieben des Ventilkörpers 6 am Führungszapfen 5 des Ventilträgers 2 nicht weiter beeinträchtigt.

In Fig. 6 ist angedeutet, dass die Flanken der pfeilspitzenförmig ausgebildeten Abstreiflippen 11, 12 auf der dem Wasserauslass zugewandten Seite steiler angestellt sind im Vergleich zur gegenüberliegenden Seite. Dadurch wird der gewünschte spitze Winkel der pfeilspitzenförmig ausgestalteten Abstreiflippen 11, 12 und gleichzeitig der steile Anstieg auf der dem Wasserzulauf des Druckreduzierventils 1 zugewandten Seite erreicht, wodurch Sandkörner vom Topfinnenumfang des Ventilkörpers 6 besonders gut abgewischt werden.

Das Druckreduzierventil 1 hat ein hier nicht weiter gezeigtes Ventilgehäuse, in dessen Gehäuseinnenraum der Ventilträger 2 mit dem an seinem Führungszapfen 5 verschieblich geführten Ventilkörper 6 eingesetzt ist. Das Ventilgehäuse kann dabei als Schlauchhülsenmutter einer flexiblen Schlauchleitung oder als hülsenförmiger Aufnahmeadapter einer Leitungskupplung ausgebildet sein.

In den Längsschnitten gemäß den Figuren 3 bis 5 und 8 ist erkennbar, dass am Topfboden des Ventilkörpers 6 stirninnenseitig eine zentrale Haltehülse 13 vorgesehen ist, in die ein am Führungszapfen 5 des Ventilträgers 2 angeordneter Haltezapfen 14 vorsteht. Am Innenumfang der Haltehülse 13 ist ein Anschlag 15 vorgesehen, der derart mit einem Gegenanschlag 16 am Außenumfang des Haltezapfens 14 zusammenwirkt, dass in Offenstellung des Druckreduzierventils 1 der Anschlag 15 und der Gegenanschlag 16 den Schiebeweg des Ventilkörpers 6 relativ zum Führungszapfen 5 des Ventilträgers 2 begrenzen. Da der Anschlag 15 und der mit ihm zusammenwirkende Gegenanschlag 16 den Schiebeweg des Ventilkörpers 6 begrenzen, wird einem unbeabsichtigten Auseinanderfallen des hier dargestellten Druckreduzierventils 1 bei der Lagerung, beim Transport oder bei der Montage entgegengewirkt. Ventilträger 2, Ventilkörper 6 und die zwischen ihnen wirksame Rückstellfeder 7 bilden nebst den dazugehörigen Ringdichtungen 17, 18 praktisch eine Einsetzeinheit oder Einsetzpatrone, die zur Vervollständigung des Druckreduzierventils 1 nur noch in das hier nicht weiter gezeigte Ventilgehäuse eingesetzt werden muss. Dadurch wird die Montage des hier dargestellten Druckreduzierventils 1 wesentlich vereinfacht.

In Figur 2 ist erkennbar, dass das die Rückstellkraft aufbringende Rückstellelement hier als Schrauben-Druckfeder 7 ausgebildet ist. Dabei umgreift die als Rückstellelement dienende Schrauben-Druckfeder 7 den Haltezapfen 14 und die Haltehülse 13. Der Haltezapfen 14 und die Haltehülse 13 sind axial zueinander und zur Ventilgehäuse-Längsachse ausgerichtet.

Der tellerförmige Ventilträgers-Abschnitt 4 des Ventilträgers 2 ist in Gebrauchsstellung des Druckreduzierventils 1 im Gehäuseinneren des hier nicht weiter gezeigten Ventilgehäuses unverrückbar gehalten. Damit das durchströmende Fluid das Druckreduzierventil 1 nur durch den zumindest einen Durchströmkanal 3 hindurch passieren kann, ist am tellerförmigen Ventilträger-Abschnitt 4 die hier auch den Ventilsitz 9 bildende Ringdichtung 17 vorgesehen, mit welcher dieser Ventilträger-Abschnitt 4 dicht am Gehäuseinnenumfang des Ventilgehäuses anliegen kann. In der in Figur 5 gezeigten Schließstellung liegt der topfförmige Ventilkörper 6 mit dem Stirnumfangsrand 8 seiner Topfform an der dem Ventilträger-Abschnitt 4 abgewandten Stirnfläche der Ringdichtung 17 dicht an. Am Führungszapfen 5 des Ventilträgers 2 ist eine weitere Ringdichtung 18 vorgesehen, die das Topfinnere des topfförmigen Ventilkörpers 6 gegenüber dem durchströmenden Fluid abdichtet. Dabei liegt die Ringdichtung 18 dicht am Topfinnenumfang des Ventilkörpers 6 an. Am Ventilkörper 6 sind außenumfangsseitig wenigstens ein Gleitelement 19 und vorzugsweise mehr als zwei, in Umfangsrichtung insbesondere gleichmäßig voneinander beabstandete Gleitelemente 19 vorgesehen, die in radialer Richtung derart über den Ventilkörper 6 vorstehen, dass zwischen dem Gehäuseinnenumfang des hier nicht gezeigten Ventilgehäuses einerseits und dem Außenumfang des Ventilkörpers 6 andererseits ein Ringkanal gebildet ist. Da der Ventilkörper 6 nur mit seinen seitlich vorstehenden Gleitelementen 19 am Gehäuseinnenumfang des Ventilgehäuses gleitet, wird die Reibungsfläche des Ventilkörpers 6 wirkungsvoll reduziert.

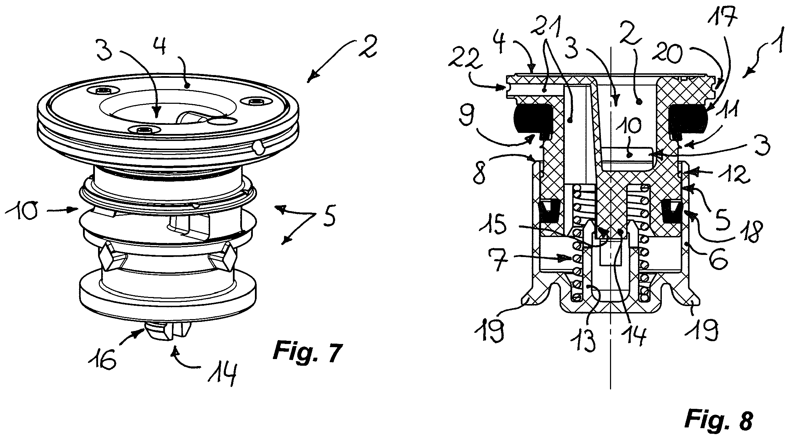

Aus dem Längsschnitt in Figur 8 wird deutlich, dass am Außenumfang des tellerförmigen Ventilträger-Abschnitts 4 eine Ringnut 20 vorgesehen ist. Diese Ringnut 20 ist über zumindest einen Belüftungskanal 21 mit dem Topfinnenraum des topfförmigen Ventilkörpers 6 verbunden. Im Ventilgehäuse des Druckreduzierventils 1 ist zumindest eine Belüftungsöffnung 22 vorgesehen, die in der Ringnut 20 am Ventilträger-Abschnitt 4 mündet. Während der Schiebebewegungen des Ventilkörpers 6 kann die im Topfinnenraum des topfförmigen Ventilkörpers 6 gefangene Luft über den Belüftungskanal 21 und die Belüftungsöffnung 22 entweichen. Auf diese Weise wird verhindert, dass sich im Topfinnenraum des topfförmigen Ventilkörpers 6 ein unerwünschter Gegendruck aufbauen kann, wenn der Druck des auslassseitigen Fluids den Ventilkörper 6 auf den Führungszapfen 5 des Ventilträgers 2 drückt. Mithilfe des im Ventilgehäuse befindlichen Druckreduzierventils 1 kann der abströmseitig nachfolgende Leitungsabschnitt und/oder eine über den abströmseitigen Leitungsabschnitt mit dem Druckreduzierventil 1 verbundene sanitäre Anlage vor einem überhohen Druck des Fluids und vor einem druckbedingten Bersten geschützt werden.

### Bezugszeichenliste

- 1: Druckreduzierventil
- 2: Ventilträger
- 3: Durchströmkanal
- 4: Ventilträger-Abschnitt
- 5: Führungszapfen
- 6: Ventilkörper
- 7: Rückstellfeder
- 8: Umfangsrand#
- 9: Ventilsitz
- 10: Kanalöffnung
- 11: erste Abstreiflippe
- 12: zweite Abstreiflippe
- 13: Haltehülse
- 14: Haltezapfen
- 15: Anschlag
- 16: Gegenanschlag
- 17: Ringdichtung
- 18: Ringdichtung
- 19: Gleitelement
- 20: Ringnut
- 21: Belüftungskanal
- 22: Belüftungsöffnung
- PF1: Durchströmrichtung

## Patentansprüche

1. Druckreduzierventil (1), das einen Ventilträger (2) mit wenigstens einem Durchströmkanal (3) aufweist und das einen topfförmigen Ventilkörper (6) hat, der an einem, in das Topfinnere des Ventilkörpers (6) vorstehenden Führungszapfen (5) von einer Offenstellung gegen eine Rückstellkraft in eine Schließstellung verschieblich geführt ist, in welcher Schließstellung der Ventilkörper (6) mit dem Umfangsrand (8) seiner Topfform derart an einem am Ventilträger (2) vorgesehenen Ventilsitz (9) anliegt, dass der Ventilkörper (6) zumindest eine Kanalöffnung (10) des wenigstens einen Durchströmkanals (3) verschließt, **dadurch gekennzeichnet, dass** am Topfinnenumfang des Ventilkörpers (6) und/oder am Zapfenaußenumfang des Führungszapfens (5) wenigstens eine Abstreiflippe (11,12) vorsteht, die (11,12) dem Zapfenaußenumfang beziehungsweise dem Topfinnenumfang des benachbarten Bauteiles (5; 6) angenähert ist oder daran (5; 6) anliegt, wobei der Führungszapfen (5) des Ventilträgers (2) eine Ringdichtung (18) aufweist, die das Topfinnere des topfförmigen Ventilkörpers (6) gegenüber einem durchströmenden Fluid abdichtet.

2. Druckreduzierventil (1) nach Anspruch 1, **dadurch gekennzeichnet, dass** wenigstens eine Abstreiflippe (11,12) oder mindestens eine der Abstreiflippen (11,12) am Zapfenaußenumfang des Führungszapfens (5) und/oder am Topfinnenumfang des Ventilkörpers (6) vorzugsweise in einer Querschnittsebene umläuft.

3. Druckreduzierventil (1) nach Anspruch 1 oder 2, **dadurch gekennzeichnet, dass** die wenigstens eine Abstreiflippe (11,12) einstückig an dem Führungszapfen (5) und/oder an den Ventilkörper (6) angeformt ist.

4. Druckreduzierventil (1) nach einem der Ansprüche 1 bis 3, **dadurch gekennzeichnet, dass** die wenigstens eine Abstreiflippe (11,12) oder mindestens eine der Abstreiflippen (11,12) eine sich zum freien Lippenrand verjüngende und vorzugsweise pfeilspitzenförmige Querschnittsform aufweist.

5. Druckreduzierventil (1) nach einem der Ansprüche 1 bis 4, **dadurch gekennzeichnet, dass** am Topfinnenumfang des Ventilkörpers (6) und/oder am Zapfenaußenumfang des Führungszapfens (5) mindestens zwei, in Längsrichtung des Ventilkörpers (6) bzw. des Führungszapfens (5) voneinander beabstandete Abstreiflippen (11,12) vorgesehen sind.

6. Druckreduzierventil (1) nach einem der Ansprüche 1 bis 5, **dadurch gekennzeichnet, dass** von den mindestens zwei, am Führungszapfen (5) vorstehenden Abstreiflippen (11,12) eine erste Abstreiflippe (11) mit der Basis ihrer Querschnittsform den Ventilsitz (9) umgrenzt und/oder an den Ventilsitz (9) unmittelbar angrenzt.

7. Druckreduzierventil (1) nach einem der Ansprüche 1 bis 6, **dadurch gekennzeichnet, dass** das Druckreduzierventil (1) ein Ventilgehäuse hat, in dessen Gehäuseinnenraum der Ventilträger (2) vorgesehen oder eingesetzt ist.

8. Druckreduzierventil (1) nach Anspruch 7, **dadurch gekennzeichnet, dass** das Ventilgehäuse als Schlauchhülsenmutter einer flexiblen Schlauchleitung oder als hülsenförmiger Aufnahmeadapter einer Leitungskupplung ausgebildet ist.

## Claims

1. Pressure-reducing valve (1) which comprises a valve support (2) with at least one through-flow channel (3), and which comprises a pot-shaped valve body (6) which is displaceably guided from an open position counter to a restoring force into a closed position at a guide journal (5) protruding into the pot-shaped interior of the valve body (6), in which closed position the valve body (6) rests via the peripheral edge (8) of its pot shape against a valve seat (9) provided on the valve support (2) so that the valve body (6) closes at least one channel opening (10) of the at least one through-flow channel (3), **characterized in that** at least one wiper lip (11, 12) protrudes at the inner circumference of the pot of the valve body (6) and/or at the outer circumference of the guide journal (5), the wiper lip (11, 12) having been moved close to or resting against the outer circumference of the journal or the inner circumference of the pot of the adjacent component (5; 6), wherein the guide journal (5) of the valve support (2) has an annular seal (18) which seals the interior of the pot of the pot-shaped valve body (6) in relation to a fluid flowing through the latter.

2. Pressure-reducing valve (1) according to Claim 1, **characterized in that** at least one wiper lip (11, 12) or at least one of the wiper lips (11, 12) preferably encircles the outer circumference of the guide journal (5) and/or the inner pot circumference of the valve body (6) in a cross-sectional plane.

3. Pressure-reducing valve (1) according to Claim 1 or 2, **characterized in that** the at least one wiper lip (11, 12) is integrally formed on the guide journal (5) and/or on the valve body (6).

4. Pressure-reducing valve (1) according to one of Claims 1 to 3, **characterized in that** the at least one wiper lip (11, 12) or at least one of the wiper lips (11, 12) has a cross-sectional shape which tapers toward the free edge of the lip and preferably has the shape of an arrow tip.

5. Pressure-reducing valve (1) according to one of Claims 1 to 4, **characterized in that** at least two wiper lips (11, 12), which are spaced apart from each other in the longitudinal direction of the valve body (6) or of the guide journal (5), are provided on the inner pot circumference of the valve body (6) and/or on the outer circumference of the guide journal (5).

6. Pressure-reducing valve (1) according to one of Claims 1 to 5, **characterized in that** a first wiper lip (11) of the at least two wiper lips (11, 12) protruding from the guide journal (5) bounds the valve seat (9) and/or rests directly against the valve seat (9) via the base of its cross-sectional shape.

7. Pressure-reducing valve (1) according to one of Claims 1 to 6, **characterized in that** the pressure-reducing valve (1) has a valve housing, in the interior space of which the valve support (2) is provided or inserted.

8. Pressure-reducing valve (1) according to Claim 7, **characterized in that** the valve housing is formed as a hose sleeve nut of a flexible hose line or as a sleeve-shaped mounting adapter of a line coupling.

## Revendications

1. Vanne de réduction de pression (1) qui comporte un support de vanne (2) avec au moins un canal d'écoulement (3) et qui possède un corps de vanne en forme de pot (6) qui est guidé en coulissement sur une goupille de guidage (5) saillant à l'intérieur du pot du corps de vanne (6) d'une position ouverte à une position fermée en s'opposant une force de rappel, dans laquelle position fermée le corps de vanne (6) repose avec la bordure périphérique (8) de sa forme de pot contre un siège de vanne (9) prévu sur le support de vanne (2) de telle sorte que le corps de vanne (6) obture au moins une ouverture de canal (10) de l'au moins un canal d'écoulement (3), **caractérisée en ce que** sur la périphérie intérieure de pot du corps de vanne (6) et/ou sur la périphérie extérieure de goupille de la goupille de guidage (5) saille au moins une lèvre racleuse (11, 12) qui est rapprochée de la périphérie extérieure de la goupille ou de la périphérie intérieure du pot de la pièce voisine (5 ; 6) ou repose contre elle, la goupille de guidage (5) du support de vanne (2) comportant un joint annulaire (18) qui assure l'étanchéité de l'intérieur du pot du corps de vanne en forme de pot (6) par rapport à un fluide traversant.

2. Vanne de réduction de pression (1) selon la revendication 1, **caractérisée en ce qu'**au moins une lèvre racleuse (11, 12) ou au moins une des lèvres racleuses (11, 12) circule sur la périphérie extérieure de goupille de la goupille de guidage (5) et/ou sur la périphérie intérieure du pot du corps de vanne (6), de préférence dans un plan transversal.

3. Vanne de réduction de pression (1) selon la revendication 1 ou 2, **caractérisée en ce que** l'au moins une lèvre racleuse (11, 12) est formée d'une seule pièce sur la goupille de guidage (5) et/ou sur le corps de vanne (6).

4. Vanne de réduction de pression (1) selon une des revendications 1 à 3, **caractérisée en ce que** l'au moins une lèvre racleuse (11, 12) ou au moins une des lèvres racleuses (11, 12) présente une forme transversale s'effilant en direction du bord de lèvre libre et de préférence en forme de pointe de flèche.

5. Vanne de réduction de pression (1) selon une des revendications 1 à 4, **caractérisée en ce que** sur la périphérie intérieure du pot du corps de vanne (6) et/ou sur la périphérie extérieure de goupille de la goupille de guidage (5) sont prévues au moins deux lèvres racleuses (11, 12) espacées l'une de l'autre dans la direction longitudinale du corps de vanne (6) ou de la goupille de guidage (5).

6. Vanne de réduction de pression (1) selon une des revendications 1 à 5, **caractérisée en ce que** sur les au moins deux lèvres racleuses (11, 12) saillant sur la goupille de guidage (5), une première lèvre racleuse (11) délimite le siège de vanne (9) avec la base de sa forme transversale et /ou est directement adjacente au siège de vanne (9).

7. Vanne de réduction de pression (1) selon une des revendications 1 à 6, **caractérisée en ce que** cette vanne de réduction de pression (1) possède un boîtier de vanne dans l'espace intérieur de boîtier duquel le support de vanne (2) est prévu ou inséré.

8. Vanne de réduction de pression (1) selon la revendication 7, **caractérisée en ce que** le boîtier de vanne est configuré comme un écrou à douille de tuyau d'une conduite en tuyau flexible ou comme un adaptateur de logement en forme de douille d'un raccord de conduite.
